(19) Europäisches Patentamt
European Patent Office
Office européen des brevets

(11) Veröffentlichungsnummer: **0 256 460 B1**

# (12) EUROPÄISCHE PATENTSCHRIFT

(45) Veröffentlichungstag der Patentschrift: **21.10.92**

(51) Int. Cl.[5]: **C09B 67/22**, C10L 1/22, //C09B29/085

(21) Anmeldenummer: **87111498.9**

(22) Anmeldetag: **08.08.87**

## (54) Farbstoffmischungen.

(30) Priorität: **13.08.86 DE 3627461**

(43) Veröffentlichungstag der Anmeldung:
**24.02.88 Patentblatt 88/08**

(45) Bekanntmachung des Hinweises auf die Patenterteilung:
**21.10.92 Patentblatt 92/43**

(84) Benannte Vertragsstaaten:
**DE ES FR GB IT NL**

(56) Entgegenhaltungen:
**EP-A- 0 073 382**
**DE-A- 2 111 370**
**US-A- 4 011 209**

(73) Patentinhaber: **BASF Aktiengesellschaft**
**Carl-Bosch-Strasse 38**
**W-6700 Ludwigshafen(DE)**

(72) Erfinder: **Derber, Bernd**
**Moselstrasse 26**
**W-6703 Limburgerhof(DE)**
Erfinder: **Senninger, Rudolf, Dr.**
**Am Dorfzaun 10**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 256 460 B1

Rank Xerox (UK) Business Services

## Beschreibung

Die Erfindung betrifft Farbstoffmischungen, enthaltend einen öllöslichen Farbstoff und einen Farbstoff der Formel I

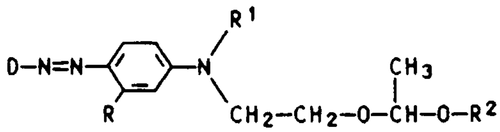

(I),

in der

- D gegebenenfalls durch Methyl oder Methoxy substituiertes Phenyl,
- R Wasserstoff oder Methyl,
- $R^1$ Wasserstoff oder $C_1$-$C_4$-Alkyl und
- $R^2$ $C_3$- oder $C_4$-Alkyl bedeuten.

Bevorzugt sind solche Farbstoffmischungen, die neben einem öllöslichen Farbstoff einen Farbstoff der Formel I enthalten, in der D Phenyl, R Wasserstoff oder Methyl, $R^1$ Ethyl und $R^2$ Isobutyl bedeuten.

Die erfindungsgemäßen Farbstoffmischungen werden zweckmäßig in Form von Lösungen hergestellt und angewandt. Als Lösungsmittel eignen sich vorzugsweise aromatische Kohlenwasserstoffe wie Toluol oder Xylol. Die öllöslichen Farbstoffe sowie die Farbstoffe der Formel I sind in den genannten Lösungsmitteln sehr gut löslich. Um allerdings eine zu hohe Viskosität der resultierenden Lösungen zu vermeiden, wählt man im allgemeinen eine Konzentration an Farbstoff von 30 bis 50 Gew.%. bezogen auf die Lösung.

Zweckmäßig werden die Farbstoffe der Formel I und der öllösliche Farbstoff im Gewichtsverhältnis 1:3 bis 3:1 in den Lösungsmitteln gelöst. Im Prinzip ist das Verhältnis natürlich völlig frei wählbar. Die erfindungsgemäßen Mischungen können einen oder mehrere öllösliche Farbstoffe und einen oder mehrere Farbstoffe der Formel I enthalten.

Öllösliche Farbstoffe für die erfindungsgemäßen Mischungen sind z.B. die im Colour Index unter Solvent Dyes aufgeführten Verbindungen, die aus verschiedenen Farbstoffklassen stammen können. Die Wahl der öllöslichen Farbstoffe richtet sich nach dem gewünschten Farbton. Die Verbindungen der Formel I sind nämlich gelb und müssen zusammen mit dem öllöslichen Farbstoff den gewünschten Farbton ergeben. Repräsentative Beispiele für öllösliche Farbstoffe sind die Farbstoffe der Formel II bis IX:

(II) Gelb

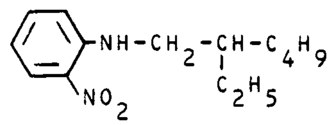

(III) Gelb

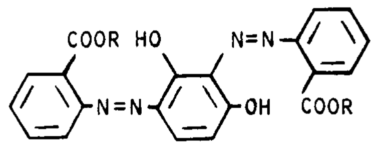

$R = C_6H_{13} + C_{13}H_{27}$

(IV) Orange

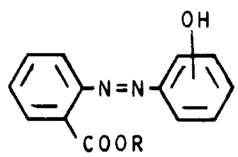

R= Alkyl-Gemisch

(V) Orange

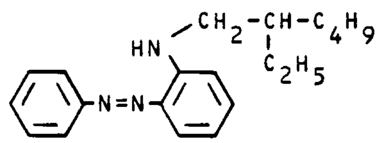

(VI) Rot

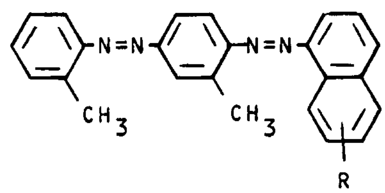

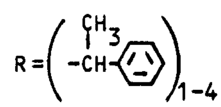

(VII) Rot

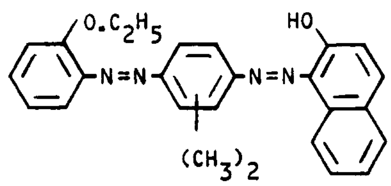

(VIII) Rot

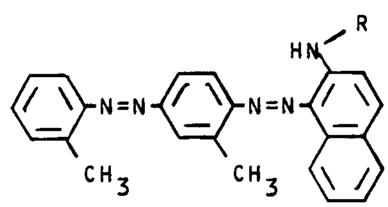

$R = C_8H_{17} + C_{13}H_{27}$

(IX) Blau

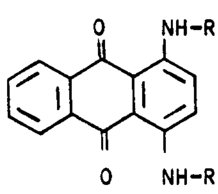

R= $C_8H_{17}$
+ $C_{13}H_{27}$
+ $CH_2CH_2CH_2-O-C_8H_{17}$
+ $CH_2CH_2CH_2-O-CH_3$

Die erfindungsgemäßen Farbstoffmischungen eignen sich insbesondere zum Färben von Mineralölprodukten, bei denen gleichzeitig eine Kennzeichnung gefordert wird, z.B. aus steuerlichen Gründen. Um die Kosten der Kennzeichnung gering zu halten, strebt man an, für die Färbung möglichst ausgiebige Farbstoffe zu verwenden, jedoch sind selbst sogenannte farbstarke Farbstoffe in hoher Verdünnung in Mineralölprodukten rein visuell nicht mehr wahrnehmbar.

Die erfindungsgemäßen Mischungen haben nun den Vorteil, daß die Verbindungen der Formel I neben ihrem Farbstoffcharakter auch noch als Kennzeichnungssubstanz geeignet sind, da sie sich mit wäßrigen oder wäßrig-alkoholischen Säuren aus den Mineralölprodukten extrahieren lassen und dabei eine intensive Rotfärbung ergeben. Dieses Verhalten ist überraschend, da in der DE-A-2 129 590, in der Farbstoffe der Formel I beschrieben sind, ausdrücklich darauf hingewiesen wird, daß diese Farbstoffe mit Hilfe von wäßrigen sauren Lösungen nicht aus Mineralölprodukten extrahierbar sind.

Mittels der erfindungsgemäßen Farbstoffmischungen gelingt es sehr einfach, markierte Mineralölprodukte nachzuweisen, selbst wenn die Markierungssubstanzen nur in einer Konzentration von ungefähr 0,1 ppm vorliegen. Von besonderer Bedeutung ist dabei die einfache Durchführung des Tests zum Nachweis der erfindungsgemäßen Mischungen. Es genügt in der Regel, eine Menge von ungefähr 100 ml des zu prüfenden Mineralölproduktes mit 10 ml der wäßrigen Säure auszuschütteln, um die Farbreaktion zu erhalten.

Als Säuren zum Extrahieren der Markierungssubstanzen eignen sich vorwiegend Mineralsäuren, z.B. Salzsäure oder Schwefelsäure, insbesondere aber wäßrige oder wäßrig-alkoholische (zweckmäßig ethanolische) Salzsäure in einer Konzentration von ungefähr 3 bis 20 Gew.%, vorzugsweise 5 bis 10 Gew.%.

Einzelheiten der Anwendung der erfindungsgemäßen Mischungen können den Beispielen entnommen werden, in denen sich Angaben über Teile und Prozente, sofern nicht anders vermerkt, auf das Gewicht beziehen. Dabei wurde als Farbstoff der Formel I in allen Beispielen jeweils derjenige mit D = Phenyl, R = Wasserstoff, $R^1$ = Ethyl und $R^2$ = Isobutyl gewählt.

Beispiel 1

Unverbleiter Vergaserkraftstoff wird mit einer Farbstoffmischung der folgenden Zusammensetzung markiert:
40 Teile einer 30 %igen Lösung des Farbstoffs I in Xylol sowie
60 Teile einer 60 %igen Lösung des blauen Farbstoffs IX in Toluol.

Der Zusatz beträgt 20 mg der genannten Mischung pro Liter Treibstoff. Man erhält eine intensive Blaugrün-Färbung der Flüssigkeit.

Durch kolorimetrische Messung bei der für den blauen Farbstoff charakteristischen Wellenlänge der Absorptionsmaxima von 416 bzw. 646 nm kann man den Farbstoffgehalt quantitativ ermitteln.

Bei sehr starken Verdünnungen genügt jedoch diese Methode nicht mehr. Bereits bei einer Verdünnung von 1:9 mit ungefärbtem Kraftstoff ist die Grünfärbung optisch nicht mehr zu erkennen. Der Gehalt an der oben beschriebenen Verbindung der Formel I ermöglicht jedoch selbst bei einer Verdünnung von 1:20 noch eine Analyse nach folgender Methode:
100 ml des zu prüfenden Vergaserkraftstoffes werden mit 10 ml einer Mischung aus 5 ml Salzsäure (10 %ig) und 5 ml Ethanol kräftig geschüttelt (z.B. 5 min auf einem geeigneten Schüttelgerät). Dabei färbt sich die alkoholisch-wäßrige Phase deutlich erkennbar rosa. Nach kurzem Stehen, wenn sich beide Phasen getrennt haben, kann man die rosa gefärbte Schicht farbmetrisch gegen eine Lösung bekannter Konzentration vergleichen und so den Farbstoffgehalt quantitativ ermitteln. Auf diese Weise läßt sich auch noch eine Vermischung des markierten Vergaserkraftstoffes mit der 20-fachen Menge an unmarkiertem Benzin einwandfrei nachweisen.

Beispiel 2

Kerosin wird mit 20 ppm der folgenden Farbstoffmischung markiert:
40 Teile einer 30 %igen Lösung des Farbstoffs I in Xylol sowie
60 Teile einer 60 %igen Lösung des roten Farbstoffs VIII in einem hochsiedenden Aromatengemisch.

Verschnitte mit unmarkiertem Mineralöl können etwa bis zu einem Mischungsverhältnis von ca. 1:20 wie folgt nachgewiesen werden:
100 ml der zu prüfenden Lösung werden mit 5 ml Salzsäure 10 %ig kräftig geschüttelt. Nach kurzem Stehen wird die Rosa-Färbung der wäßrigen Phase beurteilt.

Bei der unverdünnten Farbstofflösung in Kerosin ist die quantitative Bestimmung des Anteils an Rotfarbstoff auch nach DIN 51426 möglich, jedoch versagt diese Methode bei stark verdünnten Mischungen. Heir führt nur der oben beschrieben Nachweis des Farbstoffs I zum Ziel.

Beispiel 3

Leichtes Heizöl mit honiggelber Eigenfarbe wird mit einer Farbstoffmischung der folgenden Zusammensetzung gekennzeichnet:
40 Teile einer 30 %igen Lösung des Farbstoffs I in Xylol sowie
60 Teile eines gelben Flüssigfarbstoffs der Formel II.

Der Zusatz an obiger Mischung beträgt 20 ppm. Schüttelt man 100 ml dieses gelb gefärbten Heizöls mit 5 ml 10 %iger Salzsäure, so färbt sich die wäßrige Phase dunkelrot.

Setzt man auf obige Weise markiertes Heizöl im Verhältnis 1:10 oder gar 1:20 unmarkiertem Dieselöl zu, so ist die Vermischung optisch nicht zu erkennen. Der Nachweis der Vermischung ist aber auch hier leicht durch Ausschütteln mit Säure zu führen, da diese sich hierbei deutlich erkennbar (und meßbar) rosa färbt.

## Patentansprüche

1. Farbstoffmischungen, enthaltend einen öllöslichen Farbstoff und einen Farbstoff der Formel I

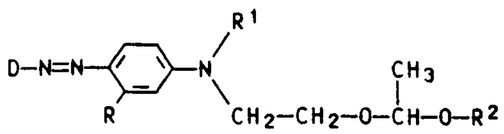

(I),

in der
- D gegebenenfalls durch Methyl oder Methoxy substituiertes Phenyl,
- R Wasserstoff oder Methyl,
- $R^1$ Wasserstoff oder $C_1$-$C_4$-Alkyl und
- $R^2$ $C_3$- oder $C_4$-Alkyl bedeuten.

2. Farbstoffmischungen gemäß Anspruch 1, dadurch gekennzeichnet, daß D Phenyl, R Wasserstoff oder Methyl, $R^1$ Ethyl und $R^2$ Isobutyl bedeuten.

3. Verwendung der Farbstoffmischungen gemäß Anspruch 1 zum Färben und Markieren von Mineralölprodukten.

## Claims

1. A dye mixture containing an oil-soluble dye and a dye of the formula I

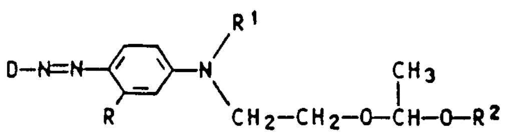

(I)

where D is phenyl which is unsubstituted or substituted by methyl or methoxy, R is hydrogen or methyl, $R^1$ is hydrogen or $C_1$-$C_4$-alkyl and $R^2$ is $C_3$- or $C_4$-alkyl.

2. A dye mixture as claimed in claim 1, wherein D is phenyl, R is hydrogen or methyl, $R^1$ is ethyl and $R^2$ is isobutyl.

3. Use of a dye mixture as claimed in claim 1 for coloring and marking mineral oil products.

## Revendications

1. Mélanges de colorants, contenant un colarant oléosoluble et un colorant de formule I

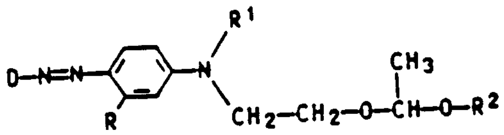

(I).

dans laquelle

D représente un radical phényle éventuellement substitué par un reste méthyle ou méthoxy,

R représente un atome d'hydrogène ou un radical méthyle,

$R^1$ représente un atome d'hydrogène ou un radical alkyle en $C_1$-$C_4$ et

$R^2$ représente un radical alkyle en $C_3$ ou $C_4$.

2. Mélanges de colorants selon la revendication 1, caractérisés en ce que D représente un radical phényle, R un atome d'hydrogène ou un radical méthyle, $R^1$ un radical éthyle et $R^2$ un radical isobutyle.

3. Utilisation des mélanges de colorant selon la revendication 1 pour la coloration et le marquage de produits pétroliers.